(19) Europäisches Patentamt European Patent Office Office européen des brevets

(11) **EP 3 979 158 A1**

(12) **EUROPEAN PATENT APPLICATION**

(43) Date of publication:
**06.04.2022 Bulletin 2022/14**

(21) Application number: **21151788.3**

(22) Date of filing: **15.01.2021**

(51) International Patent Classification (IPC):
***G06Q 10/04*** *(2012.01)*

(52) Cooperative Patent Classification (CPC):
**G06Q 10/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 EP 20199442**
**13.01.2021 PT 2021117006**

(71) Applicants:
• **Instituto de Saude Publica da Universidade do Porto**
**4050-600 Porto (PT)**

• **Universidade Do Porto**
**4099-002 Porto (PT)**

(72) Inventors:
• **GONÇALVES DE MACEDO CORREIA, CARLA MARIA**
**4050-600 PORTO (PT)**
• **CORREIA DOS SANTOS, ANA CRISTINA**
**4050-600 PORTO (PT)**
• **DIAS PINTO DE BARROS, JOSÉ HENRIQUE**
**4050-600 PORTO (PT)**

(74) Representative: **Patentree**
**Edificio Net**
**Rua de Salazares, 842**
**4149-002 Porto (PT)**

(54) **SMOOTHING METHOD FOR ESTIMATING A HAZARD RATE FUNCTION UNDER DOUBLE TRUNCATION**

(57) Smoothing method for estimating a hazard rate function ($\lambda^h$) under double truncation using lifetime data records of n individual subjects acquired within a specific period, comprising an electronic data processor configured for generating a nonparametric or semiparametric hazard estimator.

(a)                              (b)

**Fig. 7**

## Description

### TECHNICAL FIELD

The present disclosure relates to smoothing method for estimating a hazard rate under double truncation, in particular, a kernel is a smooth function applied, in both a fully nonparametric setting and a semi-parametric setting in which the incidence process fits a certain parametric model.

### BACKGROUND

The hazard rate function reports the instantaneous probability of death or failure along time, and it plays an essential role in Epidemiology and particularly in Survival Analysis. The shape of the hazard rate function helps in apprehending the mechanism that affects survival and hence, in absence of shape constraints, nonparametric methods turn out to be particularly useful for the estimation of the true curve. In this context, kernel based estimation of the hazard rate function, following the spirit of kernel density estimation [1], has received particular attention in the literature.

In Survival Analysis it is not always possible to observe a complete random sample from the population. Nonparametric estimation of density and hazard rate functions under right censoring was investigated by Diehl and Stute [2] and Müller and Wang [3], while Cai [4] considered the issue of dependent censoring. Interval sampling of survival data occurs when only those individuals whose event lies within a certain subject-specific observational window are observed [5]. Individuals with event out of such interval are not observed, and no information about them is available to the investigator. Zhou [6] studied kernel density and hazard rate estimation based on the product-limit estimator from left truncated data [7]. The mean squared error for the kernel estimator of the hazard rate from left truncated and right censored data was derived in Lemdani and Ould-Saïd [8].

Double truncation is much more involved than left (or right) truncation. Under double truncation the NPMLE introduced by [9] has no explicit form, which complicates the theoretical analysis and practical implementation of the estimator Moreira et al. ([10]) implemented in R three different iterative algorithms for the computation of the NPMLE. Moreira and de Uña- Alvarez [11] introduced kernel-type density estimation from doubly truncated data. These authors considered the purely nonparametric density estimator which results from the convolution of the NPMLE and a kernel function, as well as a semiparametric estimator which exploits the semiparametric truncation model proposed by Moreira and de Uña-Alvarez [12]. The two estimators were shown to be asymptotically equivalent but, as expected, the semi-parametric estimator exhibited a better finite-sample performance. Moreira and Van Keilegom [13] explored several bandwidth selection procedures for kernel density estimation under double truncation, which are appropriate modifications of the normal reference rule, the least squares cross-validation procedure, plug-in procedures, and a bootstrap based method. The purpose of this article is to derive and to investigate nonparametric and semiparametric hazard rate kernel estimators when the data are subject to double truncation.

The analysis of doubly truncated data has received a lot of attention in the recent literature. Among other relevant contributions, we point out the development of more efficient estimators for special forms of double truncation [16], the estimation of the association parameter and the bivariate survival under interval sampling [5, 17], and the adaptation of Cox regression to the setting of double truncation [18, 19].

These facts are disclosed in order to illustrate the technical problem addressed by the present disclosure.

References

[1] M. P. Wand and M. C. Jones. Kernel Smoothing, volume 60 of Monographs on Statis-tics and Applied Probability. Chapman and Hall Ltd., London, 1995.

[2] Sabine Diehl and Winfried Stute. Kernel density and hazard function estimation in the presence of censoring. Journal of Multivariate Analysis, 25(2):299 - 310, 1988.

[3] H G Müller and J L Wang. Hazard rate estimation under random censoring with varying kernels and bandwidths. Biometrics, 50(1):61-76, 1994.

[4] Zongwu Cai. Kernel density and hazard rate estimation for censored dependent data. Journal of Multivariate Analysis, 67(1):23 - 34, 1998.

[5] Hong Zhu and Mei-Cheng Wang. Nonparametric inference on bivariate survival data with interval sampling: association estimation and testing. Biometrika, 101(3):519- 533, 2014.

[6] Yong Zhou. Asymptotic representations for kernel density and hazard function esti- mators with left truncation. Statistica Sinica, 9(2):521-533, 1999.

[7] D. Lynden-Bell. A method for allowing for known observational selection in small samples applied to 3cr quasars.

Monthly Notices of the Royal Astronomical Society, 155:95-118, 1971.

[8] Mohamed Lemdani and Elias Ould-Saïd. Asymptotic behavior of the hazard rate kernel estimator under truncated and censored data. Communications in Statistics -Theory and Methods, 36(1):155-173, 2007.

[9] Bradley Efron and Vahe Petrosian. Nonparametric methods for doubly truncated data. Journal of the American Statistical Association, 94:824-834, 1999.

[10] C. Moreira, J. de Uña-Alvarez, and R.C. Crujeiras. Dtda: an r package to analyze randomly truncated data. Journal of Statistical Software, 37:1-20, 2010.'

[11] C. Moreira and J. de Uña-Alvarez. Kernel density estimation with doubly truncated data. Electron. J. Statist., 6:501-521, 2012.

[12] Moreira and J. de Uña-Alvarez. A semiparametric estimator of survival for doubly truncated data. Statistics in Medicine, 29:3147-3159, 2010.

[13] C. Moreira and I. Van Keilegom. Bandwidth selection for kernel density estimation with doubly truncated data. Computational Statistics & Data Analysis, 61:107 - 123, 2013.

[14] Carla Araújo, Olga Laszczyńska, Marta Viana, Filipa Melão, Ana Henriques, Andreia Borges, Milton Severo, Maria Júlia Maciel, Il'idio Moreira, and Ana Azevedo. Sex differences in presenting symptoms of acute coronary syndrome: the epiheart cohort study. BMJ Open, 8(2), 2018.

[15] J. D. Kalbfleisch and J. F. Lawless. Inference based on retrospective ascertainment: An analysis of the data on transfusion-related aids. American Statistical Association, 84:360-372, 1989.

[16] Matthew D. Austin and Rebecca A. Betensky. Eliminating bias due to censoring in kendall's tau estimators for quasi-independence of truncation and failure. Comput. Stat. Data Anal., 73:16-26, 2014.

[17] Hong Zhu and Mei-Cheng Wang. Analysing bivariate survival data with interval sampling and application to cancer epidemiology. Biometrika, 99(2):345-361, 2012.

[18] Mandel Micha, de Uña-Alvarez Jacobo, Simon David K., and Betensky Rebecca A. Inverse probability weighted cox regression for doubly truncated data. Biometrics, 74(2):481-487.

[19] Rennert Lior and Xie Sharon X. Cox regression model with doubly truncated data. Biometrics, 74(2):725-733.

[20] Michael Woodroofe. Estimating a distribution function with truncated data. The Annals of Statistics, 13:163-177, 1985. MR0773160.

[21] Bruce W. Turnbull. The empirical distribution function with arbitrarily grouped, cen- sored and truncated data. Journal of the Royal Statistical Society. Series B. Method- ological, 38:290-295, 1976.

[22] P.S. Shen. Nonparametric analysis of doubly truncated data. Annals of the Institute of Statistical Mathematics, 62:835-853, 2010.

[23] J. de Uña Alvarez and I. Van Keilegom. An asymptotic representation of efronpetrosian integrals with covariates. Preprint, 2019.

[24] Warren B. Bilker and Mei-Cheng Wang. A semiparametric extension of the mann- whitney test for randomly truncated data. Biometrics, 52:10-20, 1996.

[25] L.P. Devroye and T.J. Wagner. The I1 convergence of kernel density estimates. The Annals of Statistics, 7:1136-1139, 1979.

[26] E. Parzen. On estimation of a probability density function and mode. Annals of Mathematical Statistics, 33:1065-1076, 1962.

**GENERAL DESCRIPTION**

The present disclosure has introduced kernel hazard estimators for a variable which is observed under random double truncation. Two estimators have been proposed. The first one is purely nonparametric, and it is defined as a convolution of a kernel function with the NPMLE of the df. The second estimator is semiparametric, since it is based on a parametric specification for the df of the truncation times. Asymptotic properties of the two estimators have been discussed, including a formula for the asymptotic mean integrated squared error (MISE). Both estimators are asymptotically equivalent in the sense of having the same asymptotic MISE. However, for moderate sample sizes, we have seen through simulations that the semiparametric estimator may outperform the nonparametric estimator. Two real data illustrations were provided. In the data on the age at diagnosis of ACS, the effect of double truncation is almost negligible, thus, the two proposed estimators provided results similar to those of the naive estimator which ignores truncation. In contrast, in the Blood Transfusion data the effect of double truncation is critical and, in absence of a correction, the standard kernel estimator has a gross positive bias. A LSCV bandwidth selection criterion has been derived.

The hazard rate refers to the rate of death for an item of a given age (x). It is part of a larger equation called the hazard function, which analyzes the likelihood that an item will survive to a certain point in time based on its survival to an earlier time (t). The force of mortality is also called the force of failure. It is the probability density function of the distribution of mortality. In actuarial science, the hazard rate is the rate of death for lives aged x. Survival analysis is a branch of statistics for analyzing the expected duration of time until one or more events happen, such as death in biological organisms and failure in mechanical systems.

The nonparametric maximum likelihood (NPMLE) method is based in the likelihood principle, on the problem of dealing with an unknown distribution function in estimation or testing.

For example, the Acute Coronary Syndrome (ACS) EpiHeart cohort data in detailed description correspond to individuals experiencing a first infarction between August 2013 and December 2014. One of the goals of EpiHeart study is to evaluate the risk of infarction along time from such cohort and, therefore, the estimation of the hazard rate is of interest. Interval sampling induces random double truncation, where the left and right truncation variables are the time from onset to the left and right limits, respectively, of the sampling interval. One-sided (left or right) truncation can then be regarded as a special case of double truncation, when one of the truncation limits is not present.

This work is a result of the project DOCnet: Diabetes & obesity at the crossroads between Oncological and Cardiovascular diseases - a system analysis NETwork towards precision medicine (NORTE-01-0145-FEDER-000003), supported by Norte Portugal Regional Operational Programme (NORTE 2020), under the PORTUGAL 2020 Partnership Agreement, through the ERDF.

It is disclosed a smoothing method for estimating a hazard rate function () under double truncation using lifetime data records of n individual subjects acquired within a specific period, comprising an electronic data processor configured for generating a nonparametric hazard estimator, by carrying out the steps of: obtaining independent copies of the data to be acquired as triplets $(U_i, X_i, V_i)$ of variables $(U^*, X^*, V^*)$ with $1 \leq i \leq n$ of each $i$ individual subject over the specified period of time, where $X^*$ is the lifetime variable with distribution function F, and U* and V* (U* $\leq$ V*) are the left and right truncation variables, with joint distribution function T; calculating the nonparametric maximum likelihood estimator (NPMLE) for the conditional probability of sampling a lifetime $X^* = t$:

$$G_n(t) = \int_{\{u \leq t \leq v\}} T_n(du, dv)$$

where $T_n(u,v)$ is the NPMLE of T;
calculating an estimator of $\alpha = P(U^* \leq X^* \leq V^*)$ :

$$\alpha_n = \left( \int_{a_F}^{\infty} G_n^{-1}(t) F_n^*(dt) \right)^{-1}$$

where $a_F$ is the lower limit of a support of *F'* and $F_n^*$ is an ordinary empirical distribution function of the $X_i$'s;
estimating the hazard function by:

$$\lambda_h(x) = \alpha_n \frac{1}{n} \sum_{i=1}^{n} K_h(x - X_i) \frac{G_n(X_i)^{-1}}{1 - F_n(X_i^-)} ,$$

where $K_h(t) = K(t/h)/h$ is a re-scaled kernel function and *h* is a bandwidth, wherein *h* is a positive number.

In an embodiment, the nonparametric estimator is defined as a convolution of a kernel function with a nonparametric maximum likelihood estimation with a discrete distribution function T.

It is also disclosed a smoothing method for estimating a hazard rate function ($\lambda_{\theta,h}$) under double truncation using lifetime data records of n individual subjects acquired within a specific period, comprising an electronic data processor configured for generating a semiparametric hazard estimator, by carrying out the steps of: obtaining independent copies of the data to be acquired as triplets $(U_i, X_i, V_i)$ of variables $(U^*, X^*, V^*)$ with $1 \leq i \leq n$ of each i individual subject over the specified period of time, where X* is a lifetime variable with distribution function F, and U* and V* (U* $\leq$ V*) are the left and right truncation variables, with a parametric family of distribution function T for the conditional probability of sampling a lifetime $X^* = t$, calculating a semiparametric estimator $G_\theta$:

$$G_\theta(t) = \int_{\{u \leq t \leq v\}} T_\theta(du, dv)$$

where $T_\theta$ (u,v) is the parametric estimator of T and $\theta$ is a vector of parameters;
calculating an estimator of $\alpha = P(U^* \leq X^* \leq V^*)$:

$$\alpha_{\hat{\theta}} = \left( \int_{a_F}^{\infty} G_{\hat{\theta}}^{-1}(t) F_n^*(dt) \right)^{-1}$$

where $a_F$ is the lower limit of a support of $F$ and $F_n^*$ is an ordinary empirical $X_i$'s, distribution function of the ;
estimating the hazard function by:

$$\lambda_{\hat{\theta},h}(x) = \int K_h(x-t)\Lambda_{\hat{\theta}}(dt) \equiv \alpha_{\hat{\theta}} \frac{1}{n} \sum_{i=1}^{n} K_h(x - X_i) \frac{G_{\hat{\theta}}(X_i)^{-1}}{1 - F_{\hat{\theta}}(X_i^-)},$$

where $K_h(t) = K(t/h)/h$ is a re-scaled kernel function and $h$ is a bandwidth, wherein $h$ is a positive number.

It is also disclosed a method for applying the estimated hazard rate function according to any previous embodiments comprising the step of instantiating the estimated hazard rate function for one or more predetermined lifetimes, for obtaining a prediction of occurring an event in said lifetime.

In an embodiment, the event is a diagnosis of coronary syndrome, infection, AIDS (acquired immunodeficiency syndrome) or death.

It is also disclosed a non-transitory storage media including program instructions for implementing a computer-based smoothing method for estimating a hazard rate function under double truncation using lifetime data records of each individual subject acquired over the specified period of time, the program instructions including instructions executable by a data processor to carry out the method of the previous embodiments.

**BRIEF DESCRIPTION OF THE DRAWINGS**

The following figures provide preferred embodiments for illustrating the disclosure and should not be seen as limiting the scope of invention.

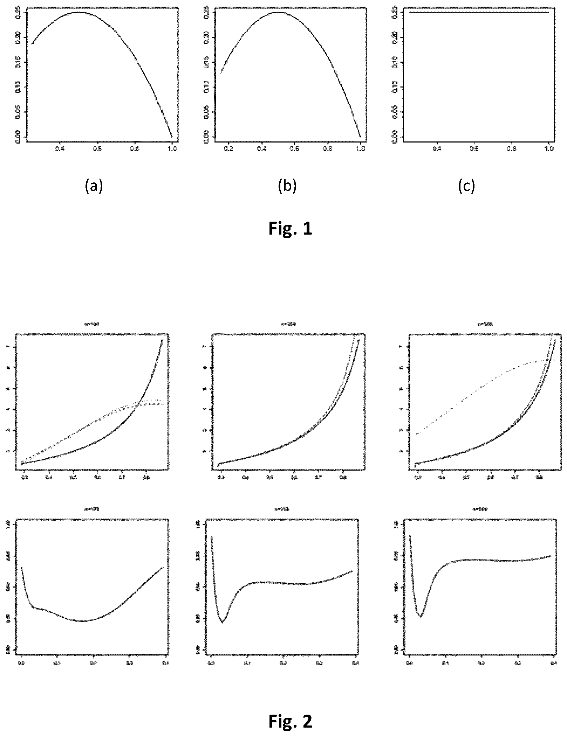

Figure 1: Graphic representation of an embodiment of shapes of the G function for the simulated models on the support of $X^*$ wherein (a) Model 1.1 (left), (b) Model 1.2 (middle) and (c) Models 2.1 and 2.2 (right).

Figure 2: Graphic representation of an embodiment, wherein (i) the target hazard (solid line) together with its semiparametric (dashed line), nonparametric (dotted line) and naive (dashed-dotted line for n=500) estimators averaged along the 1000 Monte Carlo trials for Model 1.1 (top row); (ii) The ratio between the MISE's of the semiparametric and the nonparametric estimators along a grid of bandwidths (bottom row).

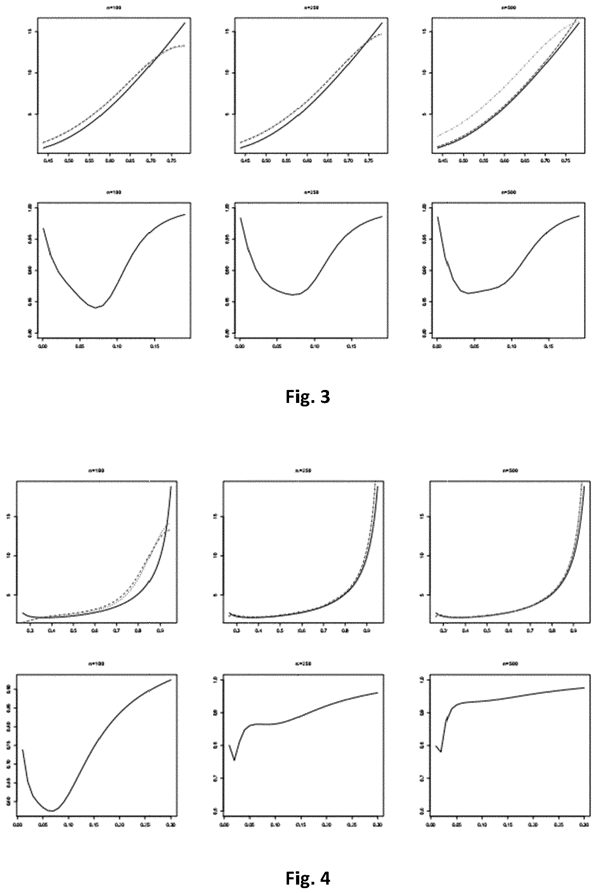

Figure 3: Illustration of results of an embodiment, wherein (i) the target hazard (solid line) together with its semiparametric (dashed line), non parametric (dotted line) and naive (dashed-dotted line for n=500) estimators averaged along the 1000 Monte Carlo trials for Model 1.2 (top row); (ii) The ratio between the MISE's of the semiparametric and the nonparametric estimators along a grid of bandwidths (bottom row).

Figure 4: Illustration of results of an embodiment, wherein (i) the target hazard (solid line) together with its semiparametric (dashed line), nonparametric (dotted line) and naive (dashed-dotted line for n=500) estimators averaged along the 1000 Monte Carlo trials for Model 2.1 (top row); (ii) The ratio between the MISE's of the semiparametric and the nonparametric estimators along a grid of bandwidths (bottom row).

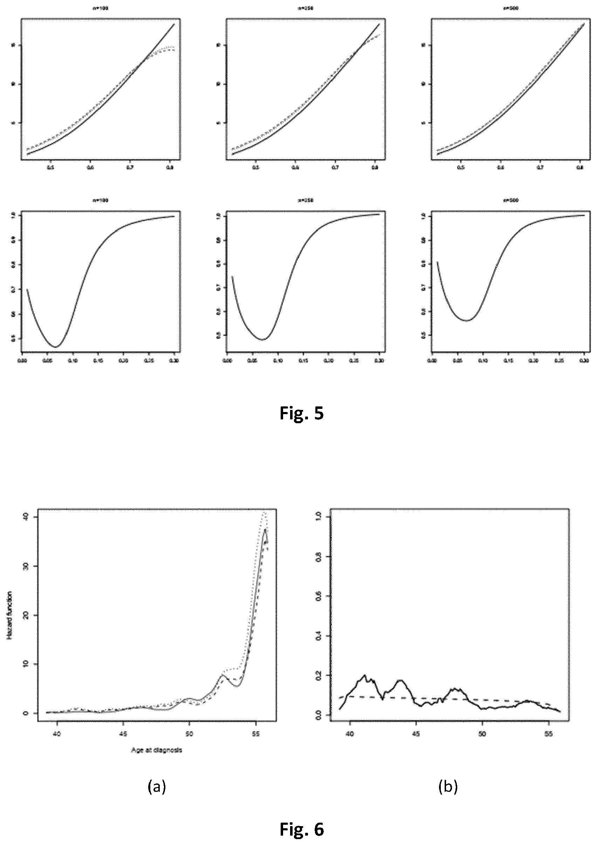

Figure 5: Illustration of results of an embodiment, wherein (i) the target hazard (solid line) together with its semiparametric (dashed line), nonparametric (dotted line) and naive (dashed-dotted line for n=500) estimators averaged along the 1000 Monte Carlo trials for Model 2.2 (top row); (ii) The ratio between the MISE's of the semiparametric and the nonparametric estimators along a grid of bandwidths (bottom row).

Figure 6: Illustration of results of an embodiment, wherein (a) Hazard estimators for the age at diagnosis, ACS data (n=243). Nonparametric estimator (solid line), semiparametric estimator (dashed line), and naive estimator (dotted line), wherein (b) Estimators $G_n$ (solid line) and $G_{\theta b}$ (dashed line), ACS data (n=243).

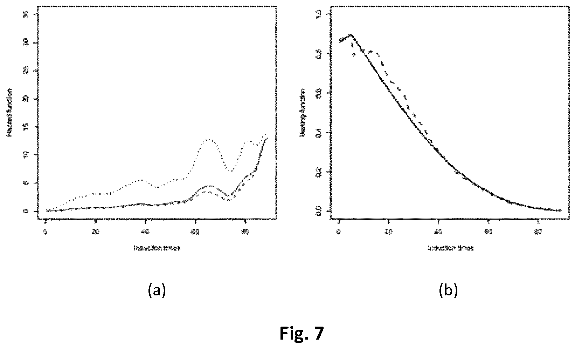

**Figure 7:** Illustration of results of an embodiment, wherein (a) Hazard estimators for the induction times. Nonparametric estimator (solid line), semiparametric estimator (dashed line), and naive estimator (dotted line), wherein (b) Estimators $G_n$ (solid line) and $G_{\theta b}$ (dashed line) for the induction times.

## DETAILED DESCRIPTION

The present disclosure relates to method for estimating a hazard rate under double truncation. In an embodiment, the estimators can be considered X* the random variable of ultimate interest, with continuous df F, and assume that it is doubly truncated by the random pair (U*; V*) with joint df T, where U* and V* $(U^* \leq V^*)$ are the left and right truncation variables respectively. This means that the triplet (U*; X*; V*) is observed if and only if $U^* \leq X^* \leq V^*$, while no information is available *when X* < U*or X* > V*.* In the special case of interval sampling we have V* = U* + r, for some constant $\tau$ > 0. It is assumed that (U*; V*) is independent of X*; we also assume that the supports of X*, U* and V* are such that the identifiability conditions for F are satisfied.

In an embodiment, the NPMLE of the cumulative df can be considered $(U_i; X_i; V_i)$, $1 \leq i \leq n$ the observed data, which are independent copies with the conditional distribution of (U*; X*; V*) given $U^* \leq X^* \leq V^*$. Here, in this disclosure assume that the NPMLE is a discrete distribution supported by the set of observed data. In an embodiment $\varphi = (\varphi_1, \dots, \varphi_n)$ can be a distribution putting probability $\varphi_i$ on $X_i$, i = 1, ... , n. Similarly, in an embodiment $\psi = (\psi_1, \dots, \psi_n)$ can be a distribution putting joint probability $\psi_i$ on $(U_i, V_i)$, i = 1, ..., n. Under the assumption of independence between X* and (U*, V*), the full likelihood, L($\varphi, \psi$), can be decomposed as a product of the conditional likelihood of the $X_i$'s given the $(U_i,V_i)$'s, say $L_1(\varphi)$, and the marginal likelihood of the $(U_i, V_i)$'s, say $L_2(\varphi, \psi)$:

$$\mathcal{L}(\varphi, \psi) = \prod_{j=1}^{n} \frac{\varphi_j}{\Phi_j} \times \prod_{j=1}^{n} \frac{\Phi_j \psi_j}{\sum_{i=1}^{n} \Phi_i \psi_i} = \mathcal{L}_1(\varphi) \times \mathcal{L}_2(\varphi, \psi)$$

(eq. 1)

$$\Phi_i = \sum_{m=1}^{n} \varphi_m J_{im}, \quad i = 1, \dots, n$$

where with $J_{im} = I_{[U_i \leq X_m \leq V_i]}$ the indicator of the event $U_i \leq X_m \leq V_i$.

The conditional NPMLE of F [9] is defined as the maximizer of $\mathcal{L}_1(\varphi)$ in equation (1):

$$\hat{\varphi} = \operatorname{argmax}_\varphi \mathcal{L}_1(\varphi).$$

$$F_n(x) = \sum_{i=1}^{n} \hat{\varphi}_i I_{[X_i \leq x]}$$

The conditional NPMLE maximizes indeed the full likelihood, which can be also written as the product

$$\mathcal{L}(\varphi, \psi) = \prod_{j=1}^{n} \frac{\psi_j}{\Psi_j} \times \prod_{j=1}^{n} \frac{\Psi_j \varphi_j}{\sum_{i=1}^{n} \Psi_i \varphi_i} = \mathcal{L}_1^*(\psi) \times \mathcal{L}_2^*(\psi, \varphi)$$

(eq. 2)

$$\Psi_i = \sum_{m=1}^{n} \psi_m J_{mi}, \quad i = 1 \dots, n.$$

where Here, $\mathcal{L}_1^*(\psi)$ denotes the conditional likelihood of the $(U_i, V_i)$'s given the $X_i$'s and $\mathcal{L}_2^*(\psi, \varphi)$ refers to the marginal likelihood of the $X_i$'s.

Introduce $\hat{\psi} = (\hat{\psi}_1, ..., \hat{\psi}_n)$ as the maximizer of $\mathcal{L}_1(\psi)$ then, $T_n(u,v) = \sum_{i=1}^{n} \hat{\psi}_i I_{[U_i \leq u, V_i \leq v]}$ is the NPMLE of T. The NPMLE of F also admits the representation

$$F_n(x) = \alpha_n \int_{a_F}^{x} \frac{F_n^*(dt)}{G_n(t)}$$ (eq. 3)

where $a_F$ is the lower limit of the support of F, $F_n^*$ is the ordinary empirical df of the $X_i$'s,

$$G_n(t) = \int_{\{u \leq t \leq v\}} T_n(du, dv)$$ (eq. 4)

is the NPMLE for the conditional probability of sampling a lifetime $X^* = t$, i.e. $G(t) = P(U^* \leq t \leq V^*)$, and

$$\alpha_n = \left( \int_{a_F}^{\infty} G_n^{-1}(t) F_n^*(dt) \right)^{-1}$$ is an estimator for $\alpha = P(U^* \leq X^* \leq V^*)$. It was investigated the asymptotic properties of $F_n$ in the particular case in which both $X^*$ and $(U^*, V^*)$ have a density. Recently, it was formally established the weak convergence of both $F_n$ and $G_n$ by providing primitive assumptions as well as detailed proofs.

In an embodiment, the semiparametric estimator of the cumulative df can be in the semiparametric approach assumed that T belongs to a parametric family of df's $\{T_\theta\}_{\theta \in \Theta}$, where $\theta$ is a vector of parameters and $\Theta$ stands for the parametric space. As a consequence, G(t) is parametrized as

$$G_\theta(t) = \int_{\{u \leq t \leq v\}} T_\theta(du, dv)$$ (eq. 5)

In an embodiment, the parameter $\theta$ is estimated by the maximizer $\hat{\theta}$ of the conditional likelihood of the $(U_i, V_i)$'s given the $X_i$'s, that is,

$$\mathcal{L}_1^*(\psi) \equiv \mathcal{L}_1^*(\theta) = \prod_{i=1}^{n} \frac{g_\theta(U_i, V_i)}{G_\theta(X_i)}$$ (eq. 6)

where $g_\theta(u,v) = \frac{\partial^2}{\partial u \partial v} P(U^* \leq u, V^* \leq v) = T_\theta(du, dv)$ stands for the joint density of $(U^*, V^*)$.

In an embodiment, in the case of interval sampling one has $V^* = U^* + \tau$ for some constant $\tau > 0$ (the sampling interval width) so the joint density of $(U^*, V^*)$ does not exist; in this case one should rather use

$g_\theta(u,v) = \frac{\partial}{\partial u} P(U^* \leq u) = L_\theta(du)$ and $G_\theta(x) = L_\theta(x) - L_\theta(x - \tau)$ in $\mathcal{L}_1^*(\theta)$, where $L_\theta(.)$ stands for the df of the parametric model assumed for $U^*$.

Once $\theta$ is estimated, a semiparametric estimator for F is introduced through

$$F_{\hat{\theta}}(x) = \alpha_{\hat{\theta}} \int_{a_F}^{x} \frac{F_n^*(dt)}{G_{\hat{\theta}}(t)},$$

(eq. 7)

where $\alpha_{\hat{\theta}} = (\int_{a_F}^{\infty} G_{\hat{\theta}}^{-1}(t) F_n^*(dt))^{-1}$. Moreira and de Una-Alvarez [12] established the asymptotic normality of both $\hat{\theta}$ and $F_{\hat{\theta}}^{\cdot}$. They also showed by simulations that $F_{\hat{\theta}}^{\cdot}$ may perform much more efficiently than the NPMLE. As a drawback, the semiparametric estimator requires preliminary specification of a parametric family, which may eventually introduce a bias component when it is far away from reality.

In an embodiment the hazard function estimators can be introduce by

$$\lambda_h(x) = \int K_h(x-t) \Lambda_n(dt) \equiv \alpha_n \frac{1}{n} \sum_{i=1}^{n} K_h(x - X_i) \frac{G_n(X_i)^{-1}}{1 - F_n(X_i^-)}$$

(eq. 8)

where $K_h(t) = K(t/h)/h$ is the re-scaled kernel function and $h=h_n$ is a deterministic bandwidth sequence with $h_n \to 0$ as $n \to \infty$.

Note that equation 8 is a purely nonparametric estimator of $\lambda$, the hazard function of $X^*$. Introduce also the semiparametric kernel hazard estimator

$$\lambda_{\hat{\theta},h}(x) = \int K_h(x-t) \Lambda_{\hat{\theta}}(dt) \equiv \alpha_{\hat{\theta}} \frac{1}{n} \sum_{i=1}^{n} K_h(x - X_i) \frac{G_{\hat{\theta}}(X_i)^{-1}}{1 - F_{\hat{\theta}}(X_i^-)}$$

(eq. 9)

In an embodiment, both $G_n$ and $G_{\hat{\theta}}^{\cdot}$ are $\sqrt{n}$- consistent estimators of G. For $G_{\hat{\theta}}^{\cdot}$ this follows from the $\sqrt{n}$- consistency of $\hat{\theta}$, provided that $G_n$ is a smooth function of $\theta$ ([12]). For $G_n$, the result may be obtained by noting that

$$G_n(x) = \alpha_n^{-1} \int \int_{\{u \le x \le v\}} \frac{T_n^*(du, dv)}{\int_{\{u \le t \le v\}} F_n(dt)}$$

(eq. 10)

and

$$\alpha_n = \int \int \frac{T_n^*(du, dv)}{\int_{\{u \le t \le v\}} F_n(dt)}$$

(eq. 11)

where $T_n^*$ is the ordinary empirical df of the truncation times. Hence, $\sqrt{n}$- consistency of $G_n$ is a consequence of that of $F_n$ and $T_n^*$; for formal derivations. Since both $G_n$ and $G_{\hat{\theta}}^{\cdot}$ approach to G at a $\sqrt{n}$- rate, which is faster than the nonparametric rate $\sqrt{nh}$, the asymptotic properties of $\lambda_\eta$ and $\lambda_{\hat\theta,h}$ will be the same, and will coincide with those of the artificial estimator based on the true G. The same argument shows that $F_n$, $F_{\hat\theta}$, $\alpha_n$ and $\alpha_{\hat\theta}$ can be replaced by their limits F and $\alpha$ for asymptotic analysis. This is in parallel with the approach in [11] for density estimation.

In an embodiment, introduce the asymptotically equivalent version of $\lambda_h$ and $\lambda_{\hat\theta,h}$ through

$$\overline{\lambda}_h(x) = \int K_h(x - t)\overline{\Lambda}_n(dt) \equiv \alpha \frac{1}{n}\sum_{i=1}^n K_h(x - X_i)\frac{G(X_i)^{-1}}{1 - F(X_i^-)}.$$ (eq. 12)

In an embodiment, the case $G(.) \equiv 1$ is possible; for example, this happens when $V^* - U^*$ is degenerated (that is, with interval sampling) provided that the left-truncation time $U^*$ is uniformly distributed in a suitable interval. In such a case, the correction for truncation vanishes and we obtain the usual kernel hazard estimators for complete data. This is not surprising, since a constant G indicates that there is no sampling bias. In general, however, the function G will not be flat and the correction for double truncation becomes relevant. In the next result we establish the strong consistency and the asymptotic normality of $\lambda_h(x)$. Throughout this Section we implicitly assume $G(x) > 0$ for each x in the support of $X^*$. Note that this condition is needed to ensure the identifiability of F along its whole support.

In an embodiment, the theorem 2.1.

(i) If K is bounded on a compact support, h is such that $\sum_{n=1}^\infty \exp(-\eta h n) < \infty$ for each $\eta > 0$, G is continuous at x, and x is a Lebesgue point of $\lambda$, then $\overline{\lambda}_h(x) \to \lambda(x)$ with probability 1.

(ii) If, in addition to the conditions in (i), K is an even function, $h = o(n^{-1/5})$, $G^{-1}/(1 - F)\lambda$ has a second derivative which is bounded in a neighbourhood of x, and $\lambda(x) > 0$, then

$$(nh)^{1/2}\left(\overline{\lambda}_h(x) - \lambda(x)\right) \to N(0, \alpha\frac{G(x)^{-1}}{1 - F(x)}\lambda(x)R(K))$$ (eq. 13)

in distribution, where $R(K) = \int K(t)^2 dt$.

The asymptotic mean and variance of equation 12 are given in the following result. We refer to the following standard regularity assumptions.

(A1) The kernel function K is a density function with $\int tK(t)dt = 0$, $\mu_2(K) = \int t^2K(t)dt < \infty$, and $R(K) = \int K(t)^2 dt < \infty$.

(A2) The sequence of bandwidths $h = h_n$ satisfies $h \to 0$ and $nh \to \infty$ as $n \to \infty$.

(A3) The functions $\lambda$ and $\frac{G^{-1}}{1-F}\lambda$ are twice continuously differentiable around x.

In an embodiment, the theorem 2.2. Under (A1)-(A3) we have, as $n \to \infty$,

$$E\left[\overline{\lambda}_h(x)\right] = \lambda(x) + \frac{1}{2}h^2\lambda''(x)\mu_2(K) + o(h^2),$$

$$Var\left[\overline{\lambda}_h(x)\right] = (nh)^{-1}\alpha\frac{G(x)^{-1}}{1 - F(x)}\lambda(x)R(K) + o((nh)^{-1}).$$

In an embodiment, the proof follows standard steps, see e.g. Wand and Jones [1]. A second-order Taylor expansion of $\lambda$, respectively of $G^{-1}\lambda/(1-F)$), around x is used, and the assumptions on the kernel and the bandwidth are enough to conclude. Details are omitted.

In an embodiment, the Theorem 2.2 it can be seen that the asymptotic variance of $\overline{\lambda}_h(x)$ is affected by the double truncation issue, while the asymptotic bias is that of the complete data case (no truncation). The variance can be smaller or larger than the one obtained without truncation (constant G) depending on the particular x value. This is intuitive, since the sampling bias due to the double truncation may result in an oversampling of certain lifetime values, while other may be undersampled.

In an embodiment, the global error of $\overline{\lambda}_h$ can be measured through the integrated MSE, namely

$$MISE(\overline{\lambda}_h) = \int MSE(\overline{\lambda}_h(x))dx,$$

where

$$MSE(\overline{\lambda}_h(x)) = \left[E[\overline{\lambda}_h(x)] - \lambda(x)\right]^2 + Var\left(\overline{\lambda}_h(x)\right).$$

Under regularity, the following asymptotic expression for the $MISE(\overline{\lambda}_h)$ is immediately derived from the previous results:

$$AMISE(\overline{\lambda}_h) = \frac{1}{4}h^4 R\left(\lambda''\right)\mu_2(K)^2 + (nh)^{-1}\alpha R(K)\int \frac{G^{-1}}{1-F}\lambda$$

where $R(\lambda'') = \int (\lambda'')^2$. Minimization of $AMISE(\overline{\lambda}_h)$ w.r.t. $h$ leads to the asymptotically optimal bandwidth

$$h_{AMISE} = \left[\frac{\alpha R(K)\int \frac{G^{-1}}{1-F}\lambda}{R\left(\lambda''\right)\mu_2(K)^2}\right]^{1/5} n^{-1/5}.$$

Of course, this expression depends on unknown quantities that must be estimated in practice. There exist several criteria to select the bandwidth from the data at hand..

Following it was illustrating the finite sample behaviour of the purely nonparametric estimator and the semiparametric estimator through simulation studies. It was analysed the influence of the bandwidth in the mean integrated squared error (MISE) of the estimators, and we measure the amount of efficiency which is gained by using the semiparametric information.

In an embodiment, it was considered two different situations of double truncation, Case 1 and Case 2. In Case 1, U*, V* and X* are mutually independent. In Case 2, we simulate U* independently of X* and then we take V* = U*+τ for some constant τ > 0. Case 2 represents interval sampling, and follows the spirit of the two real data examples presented in the present disclosure, with terminating events (acute coronary syndrome or AIDS diagnosis) falling between two specific dates. Different models are simulated for each of the Cases 1 and 2. For Case 1, we take U* ~ U(0, 1), V* ~ U(0, 1), X* ~ U(0.25, 1) (Model 1.1) and U* ~ U(0, 1), V* ~ U(0, 1), X* ~ 0.75N(0.5, 0.15) + 0.25 (Model 1.2). For Case 2, we take τ = 0.25 and U* ~ U(0, 1), X* ~ 0.75Beta(3/4, 1) + 0.25 (Model 2.1) and U* ~ U(0, 1), X* ~ 0:75N(0.5, 0.15) + 0.25 (Model 2.2). Note that when we move from Model 1.1 (resp. 2.1) to Model 1.2 (resp. 2.2) the lifetime distribution is changed while the truncating variables remain the same. On the other hand, when it is moved from Model 1.2 to Model 2.2 it is disclosure that maintaining the same lifetime distribution but the truncation distribution is changed. This should be taken into account when interpreting the results of the simulation study. It was observed, due to the random truncation, in Models 1.1 and 1.2 relatively small and moderate values of the lifetime are more probably observed, while in Models 2.1 and 2.2 there is no observational bias on X* (i.e. G(:) = 1; see Remark 2.1 in Moreira and de Uña-Alvarez [11]).

In an embodiment, the functions G corresponding to the aforementioned models, based on a Monte Carlo approximation from a single sample of size n = 20,000, is shown in **Figure 1.** The depicted functions indicate that small and large values of the variable of interest (X*) are observed with a relatively small probability in the first two models, while almost there is no observational bias in Models 2.1 and 2.2 (because G remains constant, as mentioned).

In an embodiment, as parametric information on the pair (U*, V*) we always consider a Beta($\theta_1$, 1) model for U*; in Case 1, a Beta(1, $\theta_2$) is taken for V*. For each model, we simulate 1000 trials with final sample size n = 100, 250, or 500.

In an embodiment, Table 1 relates to the optimal bandwidths (in the sense of the MISE) and the corresponding minimum MISE's for both the nonparametric and the semiparametric estimators. The theoretical MISE function is approximated by the average of the ISEs along the M =1000 trials, namely

$$\overline{ISE}(\lambda_h) = \frac{1}{M}\sum_{m=1}^{M}\int(\lambda_h^m - \lambda)^2 \quad \text{and} \quad \overline{ISE}(\lambda_{\hat{\theta},h}) = \frac{1}{M}\sum_{m=1}^{M}\int\left(\lambda_{\hat{\theta},h}^m - \lambda\right)^2,$$

where $\lambda_h^m$ and $\lambda_{\hat{\theta},h}^m$ are respectively the nonparametric and the semiparametric estimators when based on the m-th Monte Carlo trial.

In an embodiment, from Table 1 it is seen that the optimal bandwidths and the MISEs decrease when increasing the sample size; besides, the semiparametric estimator has an error which is smaller than that of the nonparametric estimator. It is also seen that the optimal bandwidths for the semiparametric estimator are generally smaller than those of the nonparametric estimator, according to the extra amount of information. As the sample size grows, the relative efficiency of the nonparametric estimator approaches to one; this is in agreement to the asymptotic equivalence of the semiparametric and the nonparametric hazard estimators discussed in Section 2. It is also seen that the MISE corresponding to Model 1.1 is smaller than that corresponding to Model 1.2; this can be explained by the relatively weaker left truncation pattern of Model 1.1 (see Figure 1). Models 1.2 and 2.2 report MISEs which are larger than those corresponding to Models 1.1 and 2.1; this is not surprising since the hazard rate in Models 1.2 and 2.2 is relatively larger.

In an embodiment, Table 2 relates to the biases and the variances of the nonparametric and semiparametric hazard estimators at some selected time points, corresponding to the quartiles of $\lambda$, for sample sizes n=100, 500, along the 1,000 Monte Carlo trials. It is seen that the squared bias is always of a smaller order when compared to the variance, so the resulting mean squared errors (MSEs) are mainly determined by the dispersion of the estimates. For all the cases, the local MSEs of the semiparametric estimator are smaller than those pertaining to the nonparametric estimator (as expected).

Table 1: Optimal bandwidths ($h_{opt}$) and minimum MISEs of the hazard estimators: nonparametric estimator (NP) and semiparametric estimator (SP). Averages along 1000 trials of a sample size n.

| Model | n | $h_{opt}$ | | $MISE(h_{opt})$ | |
|---|---|---|---|---|---|
| | | NP | SP | NP | SP |
| 1.1 | 100 | 0.291 | 0.311 | 2.453 | 2.165 |
| | 250 | 0.034 | 0.031 | 2.301 | 2.141 |
| | 500 | 0.031 | 0.031 | 1.309 | 1.116 |
| 1.2 | 100 | 0.091 | 0.091 | 6.081 | 5.197 |
| | 250 | 0.041 | 0.041 | 4.269 | 3.646 |
| | 500 | 0.031 | 0.031 | 2.892 | 2.491 |
| 2.1 | 100 | 0.100 | 0.090 | 7.723 | 4.649 |
| | 250 | 0.020 | 0.020 | 3.432 | 2.381 |
| | 500 | 0.020 | 0.020 | 1.532 | 1.031 |
| 2.2 | 100 | 0.091 | 0.078 | 9.392 | 4.713 |
| | 250 | 0.090 | 0.076 | 5.473 | 2.763 |
| | 500 | 0.070 | 0.070 | 2.483 | 1.754 |

In an embodiment, **Figures 2** to **5** it is reported for each simulated model: (i) the target hazard function together with its semiparametric and nonparametric estimators averaged along the 1000 Monte Carlo trials (bottom row); and (ii) the ratio between the MISE's of the semiparametric and the nonparametric estimators along a grid of bandwidths (top row). From these **Figures 2** to **5** several interesting features can be seen. First, for each given smoothing degree, the MISE of the semiparametric estimator is less than that of the nonparametric estimator; the relative benefits of using the semiparametric information are more clearly seen when working with relatively smaller bandwidths, when the variance component of the MISE is larger. This illustrates how the semiparametric estimator achieves a variance reduction w.r.t. the NPMLE. Also importantly, that the ratios of the MISE's approach to one as the sample size increases. This was expected, since both estimators are asymptotically equivalent. The averaged estimators depicted in **Figures 2** to **5** reveal that the semiparametric estimator fits better the target than its nonparametric competitor when the sample size is moderate.

Simulations above are informative about the relative performance of two proposed estimators when the parametric information on the truncation distribution is correctly specified. However, in practice, some level of misspecification in the parametric model may occur. To investigate the sensitivity of the semiparametric estimator to the misspecification degree, we have repeated the simulation of Model 1.1 but changing the U(0, 1) distribution of U* for a Beta(1, a) distribution, with a 6= 1, so the parametric information Beta($\theta_1$, 1) on U* is misspecified. Note that the misspecification degree increases as a departs from 1. Results on the bandwidth, the MISE, and the local MSE of both the semiparametric and nonparametric density estimators are reported in Tables 3 and 4 for the case n=500 (results based on 1,000 trials). From Table 3, it is seen that the semiparametric estimator may be still equivalent or even preferred to the nonparametric estimator in all cases of misspecification. Table 4 indicates that, when the parametric information is misspecified, the variance of the semiparamtric estimator remains smaller than that of the nonparametric estimator for almost all the cases (exceptions for a = 5 in the first two quartiles).

In an embodiment, the Real data illustration - Acute Coronary Syndrome data for illustration purposes, it was considered data on the age at diagnosis of Acute Coronary Syndrome (ACS). In Portugal, with a population of 10.3 million inhabitants, there are 38 public hospitals with resources for structured care of patients with ACS, out of which 16 have catheterisation laboratory facilities. Public hospitals provide treatment for the majority of the acute coronary events and the number of patients submitted to primary Percutaneous coronary intervention (PCI) increased by 37.0% from 2009 to 2013, although at the regional level access to this procedure varied. The EPIHeart study is a prospective assembled between August 2013 and December 2014 to the Cardiology Department of two tertiary hospitals in two regions in Northern Portugal (Hospital de São João, Porto, covering the metropolitan area of Porto in the coast; and Hospital de São Pedro, Vila Real, covering the interior, northeastern region). The inclusion criteria to the cohort were admission with a diagnosis of ACS type I, aged 18 years or older, living in the catchment area of the referred hospitals (Porto, Vila Real, Bragança or Viseu) with confirmed diagnosis of type 1 (primary spontaneous) ACS. Data was collected through structured interviews within the first 48 hours after admission. Of the 1297 patients initially considered, 939 were included in the cohort due the inclusion criteria.

The age at diagnosis (ranging from 30 to 94 years old) was doubly truncated by (U*, V*), where V* stands for the elapsed time (in years) between birth and end of the study (December 2014), and U* = V* - 1.42. Our analysis is restricted to the cases with age at diagnosis below 55 years. This is because, from a medical point of view, the presence of competing risks is less frequent for these young patients and the analysis concerned to the ACS is more accurate. Furthermore, we removed the 19 youngest patients (with ages between 30 and 39 years, 7.8% of the total) due to the instability of the NPMLE at these points. This instability is a consequence of the small cardinality $\sum_{i=1}^{n} J_{im}$ of the 'risk sets' $\{i : U_i \le X_m \le V_i\}$ along this age interval; note that the number of individuals at risk may be small when the sampling interval is very narrow (as it happens in the present disclosure), particularly around X-values with a low observed frequency. Our final sample is composed by 243 patients, and the youngest patient had 39 years old; 197 male and 46 female.

The semiparametric and the nonparametric kernel estimators for the hazard function of X* computed from the n = 243 cases are given in Figure 6, left panel. The scale in the horizontal axis comes from the transformation (t - 38)=17, which has been used for the ages at diagnosis and the truncation variables. With this transformation, the U* is supported on the (0; 1) interval. For the semiparametric estimator, it was assumed a Beta($\theta1$; $\theta2$) model for U*, and the parameters are estimated by maximizing the conditional likelihood of the truncation times. Generally speaking it is seen that the trend of the hazard of acute coronary syndrome increases as the age at diagnosis increases. It is also seen a local mode, approximately between 51 and 53 years old. The optimal bandwidths, derived from the LSCV method are h = 0:028 and h = 0:031 for the nonparametric and semiparametric estimators, respectively. For comparison purposes the naive estimator is also computed (h = 0:042). It was disclosure that the three estimators are close to each other **(Figure 6,** left panel), suggesting no impact of the double truncation issue in the hazard function, although some differences can be seen in the aforementioned local mode point.

Table 3: Optimal bandwidths (hopt) and minimum MISEs of the hazard estimators: nonparametric estimator (NP) and semiparametric estimator (SP). Averages along 1000 trials of a sample size n = 500. Similar as Model 1.1, but U* is simulated as a Beta (1, a) random variable.

| a | $h_{opt}$ | | $MISE(h_{opt})$ | |
|---|---|---|---|---|
| | NP | SP | NP | SP |
| 1/5 | 0.027 | 0.037 | 1.632 | 1.492 |
| 1/2 | 0.028 | 0.030 | 1.586 | 1.443 |
| 1 | 0.031 | 0. 031 | 1.309 | 1.116 |
| 3/2 | 0.025 | 0.025 | 2.794 | 1.850 |
| 5 | 0.024 | 0.026 | 6.024 | 3.386 |

The biasing function for the ACS individuals are displayed in **Figure 6,** right panel. It can be seen that the parametric biasing function $\hat{G}_\theta$ is roughly flat, and this explains why the semiparametric hazard estimator mimics the naive one which does not correct for double truncation. On the other hand, $G_n$ exhibits some bumps around $\hat{G}_\theta$, which result in a wigglier hazard estimate. Summaryzing, one may say that the sampling bias induced by the interval sampling is not critical for the ACS data.

Table 4: Bias ($\times 10^3$) and variances ($\times 10$) of the nonparametric estimator (NP) and semiparametric estimator (SP) at the quartiles of F, for sample sizes n=500, along 1000 Monte Carlo trials. Misspecified parametric model.

| a | x | NP | | SP | |
|---|---|---|---|---|---|
| | | Bias | Var | Bias | Var |
| 1/5 | $F^{-1}(0.25)$ | 0.44 | 0.51 | 11.80 | 0.44 |
| | $F^{-1}(0.50)$ | 7.02 | 1.26 | 6.45 | 0.99 |
| | $F^{-1}(0.75)$ | 1825.00 | 11.64 | 4687.00 | 6.86 |
| 1/2 | $F^{-1}(0.25)$ | 0.50 | 0.44 | 0.92 | 0.35 |
| | $F^{-1}(0.50)$ | 7.18 | 1.08 | 1.83 | 0.73 |
| | $F^{-1}(0.75)$ | 36.84 | 4.18 | 2.89 | 2.93 |
| 1 | $F^{-1}(0.25)$ | 0.80 | 0.39 | 0.99 | 0.30 |
| | $F^{-1}(0.50)$ | 7.70 | 1.06 | 8.80 | 0.87 |
| | $F^{-1}(0.75)$ | 38.28 | 4.47 | 37.98 | 3.79 |
| 3/2 | $F^{-1}(0.25)$ | 0.58 | 40.42 | 24.23 | 0.34 |
| | $F^{-1}(0.50)$ | 0.02 | 1.13 | 55.54 | 1.03 |
| | $F^{-1}(0.75)$ | 39.09 | 4.88 | 171.48 | 4.59 |
| 5 | $F^{-1}(0.25)$ | 1.57 | 48.41 | 1.98 | 51.30 |
| | $F^{-1}(0.50)$ | 14.75 | 1.36 | 293.40 | 1.53 |
| | $F^{-1}(0.7.5)$ | 3176.00 | 8.90 | 2037.00 | 8.58 |

AIDS Blood Transfusion data

In an embodiment, it was used epidemiological data on transfusion-related Acquired Immune Deficiency Syndrome (AIDS). The AIDS Blood Transfusion data were collected from the Centers for Disease Control (CDC), which is from a registry database, a common source of medical data (see [24], [15]). The variable of interest (X*) is the induction or incubation time, which is defined as the time elapsed from Human Immunodeficiency virus (HIV) infection to the clinical manifestation of AIDS. The CDC AIDS Blood Transfusion Data can be viewed as being doubly truncated. The data were retrospectively ascertained for all transfusion-associated AIDS cases in which the diagnosis of AIDS occurred prior to the end of the present disclosure, thus leading to right-truncation. Besides, because HIV was unknown prior to 1982, any cases of transfusion-related AIDS before this time would not have been properly classified and thus would have been missed. Thus, in addition to right-truncation, the observed data were also truncated from the left.

In an embodiment, data included 494 cases reported to the CDC prior to January 1, 1987, and diagnosed prior to July 1, 1986. Of the 494 cases, 295 had consistent data, and the infection could be attributed to a single transfusion or short series of transfusions. Our analyses are restricted to this subset, which is entirely reported in Kalbfleish and Lawless [15], **Table 1.** Values of U* were obtained by measuring the time from HIV infection to January 1, 1982; while V* was defined as time from HIV infection to the end of study (July 1, 1986). Note that the difference between V* and its respective U* is always July 1, 1986 - January 1, 1982 = 4.5 years. The times were considered in months.

In an embodiment, the semiparametric and the nonparametric kernel estimators for the hazard rate function of X* computed from the n = 295 cases are given in Figure 7, left panel. The transformation (t + 49)/95 has been used for the ages at diagnosis and the truncation variables. With this transformation, the U* is supported on the (0, 1) interval. For better analysis of the figures, the ages in the horizontal axis are reported in their original scale (months). As in our first real data illustration, for the semiparametric estimator, we assume a Beta($\theta_1$; $\theta_2$) model for U*, and the parameters are estimated by maximizing the conditional likelihood of the truncation times. This parametrization has been used since it permits a range of different curves to describe the data.

In an embodiment, the optimal (LSCV) bandwidths for the nonparametric and semiparametric estimators were h = 0.61 and h = 0.53 respectively. For comparison purposes, the naive kernel hazard estimator which does not correct the double truncation issue is also reported. **Figure 7,** left panel, reveals that the hazard increases with the induction times, which is in accordance with the literature. It is also seen that the proposed estimators are close to each other along their whole support, while the naive estimator clearly overestimates the hazard function.

In an embodiment, **Figure 7,** right panel, we display the parametric and nonparametric biasing functions. The two estimators are roughly equivalent, and they both suggest a sampling probability which decreases as the induction time increases. This decreasing shape of the function G is indeed responsible for the positive bias of the naive hazard estimator. Indeed, it can be proved in general that, when G is non-increasing, the hazard rate corresponding to the observed X is greater than the target. Both the nonparametric and the semiparametric estimators declare a mode around 65-68 months for the hazard, although with no epidemiological interpretation.

In the present disclosure, it has introduced kernel hazard estimators for a variable which is observed under random double truncation. Two estimators have been proposed. The first one is purely nonparametric, and it is defined as a convolution of a kernel function with the NPMLE of the df. The second estimator is semiparametric, since it is based on a parametric specification for the df of the truncation times. Asymptotic properties of the two estimators have been discussed, including a formula for the asymptotic mean integrated squared error (MISE). Both estimators are asymptotically equivalent in the sense of having the same asymptotic MISE. However, for moderate sample sizes, we have seen through simulations that the semiparametric estimator may outperform the nonparametric estimator. Two real data illustrations were provided. In the data on the age at diagnosis of ACS, the effect of double truncation is almost negligible, thus, the two proposed estimators provided results similar to those of the naive estimator which ignores truncation. In contrast, in the Blood Transfusion data the effect of double truncation is critical and, in absence of a correction, the standard kernel estimator has a gross positive bias. A LSCV bandwidth selection criterion has been derived.

In an embodiment of Theorem 2.1 Proof. For (i) introduce $\tilde{\lambda}_h(x) = \alpha \frac{G(x)^{-1}}{1 - F(x)} f_h^*(x)$ where

$$f_h^*(x) = \frac{1}{n} \sum_{i=1}^{n} K_h(x - X_i)$$

is the ordinary kernel density estimator computed from the observed data. By [25] we have $f_h^*(x) \to f^*(x)$ almost surely, where f* is the density of F*. Now, if the support of K is contained in [-a, a],

$$\left| \overline{\lambda}_h(x) - \tilde{\lambda}_h(x) \right| \leq \alpha f_h^*(x) \sup_{x - ah \leq y \leq x + ah} \left| \frac{G(y)^{-1}}{1 - F(y)} - \frac{G(x)^{-1}}{1 - F(x)} \right|,$$

and the supremum goes to zero by the continuity of G at x. This ends with the proof to (i). Statement (ii) is proved similarly to Section 2 of [26]; by following such lines we obtain

$$(nh)^{1/2} \left( \overline{\lambda}_h(x) - E\overline{\lambda}_h(x) \right) \to N(0, \alpha \frac{G(x)^{-1}}{1 - F(x)} \lambda(x) R(K)).$$

Now, a two-term Taylor expansion (and the fact that K is even) gives $E\overline{\lambda}_h(x) = \lambda(x) + O(h^2)$. Since $nh^5 \to 0$, this implies the claimed result.

Least-squares cross-validation bandwidth selection

In order to introduce the LSCV bandwidth selector, we restrict attention in this section to the semiparametric estimator $\lambda_{\hat{\theta}, h}$. For the nonparametric estimator one can follow analogous steps.

In an embodiment, LSCV aims to estimate the MISE and then to minimize the MISE with respect to h. Given the estimator $\lambda_{\hat{\theta}, h}$ of a hazard $\lambda$, the mean integrated squared error can be written as

$$MISE(\lambda_{\widehat{\theta},h}) = E[ISE(\lambda_{\widehat{\theta},h})]$$

$$= E\left[\int (\lambda_{\widehat{\theta},h}(x) - \lambda(x))^2 dx\right] = E\left[\int \lambda_{\widehat{\theta},h}^2(x)\,dx - 2\int \lambda_{\widehat{\theta},h}(x)\lambda(x)dx + \int \lambda^2(x)dx\right].$$

In an embodiment, the term $\int \lambda^2(x)dx$ does not depend on h, and so minimizing $MISE(\lambda_{\widehat{\theta},h})$ is equivalent to minimizing

$$S(\lambda_{\widehat{\theta},h}) = MISE(\lambda_{\widehat{\theta},h}) - \int \lambda^2(x)dx = E\left[\int \lambda_{\widehat{\theta},h}^2(x)\,dx - 2\alpha\int \lambda_{\widehat{\theta},h}(x)\frac{G^{-1}(x)}{1-F(x)}F^*(dx)\right].$$

In an embodiment, in order to construct an estimator of $S(\lambda_{\widehat{\theta},h})$, let $\lambda_{\widehat{\theta},h;-i}$ be the hazard estimator constructed from all data points except $X_i$, i.e.

$$\lambda_{\widehat{\theta},h;-i}(x) = \alpha_{\widehat{\theta};-i}\frac{1}{n-1}\sum_{i\neq i} K_h(x - X_j)\frac{G_{\widehat{\theta};-i}^{-1}(X_j)}{1-F_{\widehat{\theta};-i}(X_j)},$$

where $G_{\widehat{\theta};-i}^{\wedge}(\cdot)$, $\alpha_{\widehat{\theta};-i}^{\wedge}(\cdot)$ and $F_{\widehat{\theta};-i}^{\wedge}(\cdot)$ are the estimators of G, $\alpha$ and F($\cdot$), except that the i-th data point is not used for estimating $\theta$. Now define

$$LSCV(h) = \int \lambda_{\widehat{\theta},h}^2(x)\,dx - 2n^{-1}\sum_{i=1}^{n} \alpha_{\widehat{\theta};-i}\lambda_{\widehat{\theta},h;-i}(X_i)\frac{G_{\widehat{\theta};-i}^{-1}(X_i)}{1-F_{\widehat{\theta};-i}(X_i)},$$

and estimate the optimal h by minimizing LSCV (h) over h:

$$\widehat{h}_{LSCV} = \underset{h}{\arg\min}\, LSCV(h).$$

Note that

$$E\left[n^{-1}\sum_{i=1}^{n} \alpha_{\widehat{\theta};-i}\lambda_{\widehat{\theta},h;-i}(X_i)\frac{G_{\widehat{\theta};-i}^{-1}(X_i)}{1-F_{\widehat{\theta};-i}(X_i)}\right]$$

$$= E\left[\alpha_{\widehat{\theta};-1}\lambda_{\widehat{\theta},h;-1}(X_1)\frac{G_{\widehat{\theta};-1}^{-1}(X_1)}{1-F_{\widehat{\theta};-1}(X_1)}\right]$$

$$= E\left[\alpha_{\widehat{\theta};-1}\int \lambda_{\widehat{\theta},h;-1}(x)\frac{G_{\widehat{\theta};-1}^{-1}(x)}{1-F_{\widehat{\theta};-1}(x)}F^*(dx)\right],$$

and        this        is        asymptotically        equivalent        to

$$E\left[\alpha\int \overline{\lambda}_{h;-1}(x)\frac{G^{-1}(x)}{1-F(x)}F^*(dx)\right] = E[\int \overline{\lambda}_{h;-1}(x)\Lambda(dx)] = E[\int \overline{\lambda}_h(x)\lambda(x)dx],$$ where the latter equality follows from the fact that $E\{\lambda_{\theta,h}(x)\}$ depends only on the kernel and the bandwidth, and not on the sample size. Hence, E[LSCV (h)] is asymptotically equivalent to $S(\lambda_{\widehat{\theta},h})$, which suggests that we can expect $\widehat{h}_{LSCV}$ to be close to the minimizer of $S(\lambda_{\widehat{\theta},h})$, that is, the minimizer of $MISE(\lambda_{\widehat{\theta},h})$.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

**Claims**

1. Smoothing method for estimating a hazard rate function ($\lambda_h$) under double truncation using lifetime data records of n individual subjects acquired within a specific period, comprising an electronic data processor configured for generating a nonparametric hazard estimator, by carrying out the steps of:

   obtaining independent copies of the data to be acquired as triplets ($U_i$, $X_i$, $V_i$) of variables ($U^*$, $X^*$, $V^*$) with $1 \le i \le n$ of each $i$ individual subject over the specified period of time, where $X^*$ is the lifetime variable with distribution function F, and $U^*$ and $V^*$ ($U^* \le V^*$) are the left and right truncation variables, with joint distribution function T; calculating the nonparametric maximum likelihood estimator (NPMLE) for the conditional probability of sampling a lifetime $X^* = t$:

$$G_n(t) = \int_{\{u \le t \le v\}} T_n(du, dv)$$

   where $T_n(u,v)$ is the NPMLE of T;
   calculating an estimator of $\alpha = P(U^* \le X^* \le V^*)$.

$$\alpha_n = \left( \int_{a_F}^{\infty} G_n^{-1}(t) F_n^*(dt) \right)^{-1}$$

   where $a_F$ is the lower limit of a support of $F$ and $F_n^*$ is an ordinary empirical distribution function of the $X_i$'s; estimating the hazard function by:

$$\lambda_h(x) = \alpha_n \frac{1}{n} \sum_{i=1}^{n} K_h(x - X_i) \frac{G_n(X_i)^{-1}}{1 - F_n(X_i^-)},$$

   where $K_h(t) = K(t/h)/h$. is a re-scaled kernel function and $h$ is a bandwidth, wherein $h$ is a positive number.

2. Smoothing method according to the previous claim wherein the nonparametric estimator is defined as a convolution of a kernel function with a nonparametric maximum likelihood estimation with a discrete distribution function T.

3. Smoothing method for estimating a hazard rate function ($\hat{\lambda}_{\theta,h}$) under double truncation using lifetime data records of $n$ individual subjects acquired within a specific period, comprising an electronic data processor configured for generating a semiparametric hazard estimator, by carrying out the steps of:

   obtaining independent copies of the data to be acquired as triplets ($U_i$, $X_i$, $V_i$) of variables ($U^*$, $X^*$, $V^*$) with $1 \le i \le n$ of each i individual subject over the specified period of time, where $X^*$ is a lifetime variable with distribution function F, and $U^*$ and $V^*$ ($U^* \le V^*$) are the left and right truncation variables, with a parametric family of distribution function T for the conditional probability of sampling a lifetime $X^* = t$,; calculating a semiparametric estimator $G_\theta$;

$$G_\theta(t) = \int_{\{u \leq t \leq v\}} T_\theta(du, dv)$$

where $T_\theta(u,v)$ is the parametric estimator of T and $\theta$ is a vector of parameters;
calculating an estimator of $\alpha = P(U^* \leq X^* \leq V^*)$:

$$\alpha_{\hat{\theta}} = \left( \int_{a_F}^{\infty} G_{\hat{\theta}}^{-1}(t) F_n^*(dt) \right)^{-1}$$

where $a_F$ is the lower limit of a support of $F$ and $F_n^*$ is an ordinary empirical distribution function of the $X_i$'s;
estimating the hazard function by:

$$\lambda_{\hat{\theta},h}(x) = \int K_h(x-t)\Lambda_{\hat{\theta}}(dt) \equiv \alpha_{\hat{\theta}} \frac{1}{n} \sum_{i=1}^{n} K_h(x - X_i) \frac{G_{\hat{\theta}}(X_i)^{-1}}{1 - F_{\hat{\theta}}(X_i^-)},$$

where $K_h(t) = K(t/h)/h$ is a re-scaled kernel function and $h$ is a bandwidth, wherein $h$ is a positive number.

4. Method for applying the estimated hazard rate function according to any previous claims comprising the step of instantiating the estimated hazard rate function for one or more predetermined lifetimes, for obtaining a prediction of occurring an event in said lifetime.

5. Method according to the previous claim for applying to a clinical or epidemiological study of predetermined duration with the left and right truncation caused by a start date and an end date of said study.

6. Method according to the previous claim, wherein the event is a diagnosis of coronary syndrome, infection, AIDS (acquired immunodeficiency syndrome) or death.

7. Non-transitory storage media including program instructions for implementing a computer-based smoothing method for estimating a hazard rate function under double truncation using lifetime data records of each individual subject acquired over the specified period of time, the program instructions including instructions executable by a data processor to carry out the method of the previous claims.

(a)          (b)          (c)

**Fig. 1**

**Fig. 2**

**Fig. 3**

**Fig. 4**

**Fig. 5**

(a)                                                    (b)

**Fig. 6**

(a)                           (b)

**Fig. 7**

Europäisches
Patentamt

European
Patent Office

Office européen
des brevets

# EUROPEAN SEARCH REPORT

Application Number

EP 21 15 1788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/142278 A1 (UNIV COLUMBIA [US]; TERAVAINEN TIMOTHY [US] ET AL.) 18 October 2012 (2012-10-18) * figure 3 * ----- | 1-7 | INV. G06Q10/04 |

TECHNICAL FIELDS
SEARCHED        (IPC)

G06Q

The present search report has been drawn up for all claims

| Place of search | Date of completion of the search | Examiner |
|---|---|---|
| Munich | 6 April 2021 | Heselius, Per |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 1788

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2021

| Patent document cited in search report | Publication date | Patent family member(s) | Publication date |
|---|---|---|---|
| WO 2012142278 A1 | 18-10-2012 | US 2015100284 A1<br>WO 2012142278 A1 | 09-04-2015<br>18-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. P. WAND ; M. C. JONES.** Kernel Smoothing, volume 60 of Monographs on Statis-tics and Applied Probability. Chapman and Hall Ltd, 1995, vol. 60
- **SABINE DIEHL ; WINFRIED STUTE.** Kernel density and hazard function estimation in the presence of censoring. *Journal of Multivariate Analysis,* 1988, vol. 25 (2), 299-310
- **H G MÜLLER ; J L WANG.** Hazard rate estimation under random censoring with varying kernels and bandwidths. *Biometrics,* 1994, vol. 50 (1), 61-76
- **ZONGWU CAI.** Kernel density and hazard rate estimation for censored dependent data. *Journal of Multivariate Analysis,* 1998, vol. 67 (1), 23-34
- **HONG ZHU ; MEI-CHENG WANG.** Nonparametric inference on bivariate survival data with interval sampling: association estimation and testing. *Biometrika,* 2014, vol. 101 (3), 519-533
- **YONG ZHOU.** Asymptotic representations for kernel density and hazard function esti- mators with left truncation. *Statistica Sinica,* 1999, vol. 9 (2), 521-533
- **D. LYNDEN-BELL.** A method for allowing for known observational selection in small samples applied to 3cr quasars. *Monthly Notices of the Royal Astronomical Society,* 1971, vol. 155, 95-118
- **MOHAMED LEMDANI ; ELIAS OULD-SAÏD.** Asymptotic behavior of the hazard rate kernel estimator under truncated and censored data. *Communications in Statistics -Theory and Methods,* 2007, vol. 36 (1), 155-173
- **BRADLEY EFRON ; VAHE PETROSIAN.** Nonparametric methods for doubly truncated data. *Journal of the American Statistical Association,* 1999, vol. 94, 824-834
- **C. MOREIRA ; J. DE UÑA-ALVAREZ ; R.C. CRUJEIRAS.** Dtda: an r package to analyze randomly truncated data. *Journal of Statistical Software,* 2010, vol. 37, 1-20
- **C. MOREIRA ; J. DE UÑA-ALVAREZ.** Kernel density estimation with doubly truncated data. *Electron. J. Statist.,* 2012, vol. 6, 501-521
- **MOREIRA ; J. DE UÑA-ALVAREZ.** A semiparametric estimator of survival for doubly truncated data. *Statistics in Medicine,* 2010, vol. 29, 3147-3159

- **C. MOREIRA ; I. VAN KEILEGOM.** Bandwidth selection for kernel density estimation with doubly truncated data. *Computational Statistics & Data Analysis,* 2013, vol. 61, 107-123
- **CARLA ARAÚJO ; OLGA LASZCZYŃSKA ; MARTA VIANA ; FILIPA MELÃO ; ANA HENRIQUES ; ANDREIA BORGES ; MILTON SEVERO ; MARIA JÚLIA MACIEL ; IL'IDIO MOREIRA ; ANA AZEVEDO.** Sex differences in presenting symptoms of acute coronary syndrome: the epiheart cohort study. *BMJ Open,* 2018, vol. 8 (2
- **J. D. KALBFLEISCH ; J. F. LAWLESS.** Inference based on retrospective ascertainment: An analysis of the data on transfusion-related aids. American Statistical Association, 1989, vol. 84, 360-372
- **MATTHEW D. AUSTIN ; REBECCA A. BETENSKY.** Eliminating bias due to censoring in kendall's tau estimators for quasi-independence of truncation and failure. *Comput. Stat. Data Anal.,* 2014, vol. 73, 16-26
- **HONG ZHU ; MEI-CHENG WANG.** Analysing bivariate survival data with interval sampling and application to cancer epidemiology. *Biometrika,* 2012, vol. 99 (2), 345-361
- **MANDEL MICHA ; DE UÑA-ALVAREZ JACOBO ; SIMON DAVID K. ; BETENSKY REBECCA A.** Inverse probability weighted cox regression for doubly truncated data. *Biometrics,* vol. 74 (2), 481-487
- **RENNERT LIOR ; XIE SHARON X.** Cox regression model with doubly truncated data. *Biometrics,* vol. 74 (2), 725-733
- **MICHAEL WOODROOFE.** Estimating a distribution function with truncated data. *The Annals of Statistics,* 1985, vol. 13, 163-177
- **BRUCE W. TURNBULL.** The empirical distribution function with arbitrarily grouped, cen- sored and truncated data. *Journal of the Royal Statistical Society. Series B. Method- ological,* 1976, vol. 38, 290-295
- **P.S. SHEN.** Nonparametric analysis of doubly truncated data. *Annals of the Institute of Statistical Mathematics,* 2010, vol. 62, 835-853
- **J. DE UÑA ALVAREZ ; I. VAN KEILEGOM.** An asymptotic representation of efronpetrosian integrals with covariates. *Preprint,* 2019

- **WARREN B. BILKER ; MEI-CHENG WANG.** A semiparametric extension of the mann- whitney test for randomly truncated data. *Biometrics,* 1996, vol. 52 (10-20

- **L.P. DEVROYE ; T.J. WAGNER.** The I1 convergence of kernel density estimates. *The Annals of Statistics,* 1979, vol. 7, 1136-1139
- **E. PARZEN.** On estimation of a probability density function and mode. *Annals of Mathematical Statistics,* 1962, vol. 33, 1065-1076